# EUROPÄISCHE PATENTSCHRIFT

(11) **EP 0 498 227 B1**
(45) Veröffentlichungstag und Bekanntmachung des Hinweises auf die Patenterteilung: **14.12.1994**
(21) Anmeldenummer: 92101124.3
(22) Anmeldetag: 24.01.1992
(51) Int. Cl.: B29B 7/76

(54) **Verfahren und Einrichtung zum Herstellen eines fliessfähigen Reaktionsgemisches aus mindestens zwei fliessfähigen, miteinander zu Massivstoff oder Schaumstoff reagierenden Reaktionskomponenten(11.11.11)**
Method and device for making a reactive mixture capable of flowing from at least two reactive components capable of flowing which react to form a solid or a foamy material
Procédé et dispositif pour la fabrication d'un mélange réactif apte à couler à partir d'au moins deux composants réactifs aptes à couler qui réagissent l'un avec l'autre pour former un matériau solide ou mousseux

(30) Priorität: 06.02.1991 DE 4103532
(43) Veröffentlichungstag der Anmeldung: 12.08.1992
(73) Patentinhaber: MASCHINENFABRIK HENNECKE GmbH, D-51379 Leverkusen (DE)
(72) Erfinder: Proksa, Ferdinand, Dr., W-5090 Leverkusen 3 (DE); Sulzbach, Hans-Michael, Dipl.-Ing., W-5330 Königswinter 21 (DE); Althausen, Ferdinand, W-5206 Neunkirchen 1 (DE); Duschanek, Helmut, Dipl-Ing., W-5330 Königswinter 21 (DE); Raffel, Reiner, Dipl-Ing., W-5200 Siegburg 1 (DE)
(74) Vertreter: Drope, Rüdiger, Dr.

(56) Entgegenhaltungen:
- EP-A- 0 037 523
- EP-A- 0 079 510
- EP-A- 0 261 368
- DE-A- 2 065 057
- DE-A- 3 313 042
- FR-A- 2 428 520
- PATENT ABSTRACTS OF JAPAN vol. 12, no. 338 (C-527)(3185) 12. September 1988 & JP-A-63 097 218 (POLYURETHAN)

## Beschreibung

Die Endung betrifft ein Verfahren und eine Einrichtung zum Herstellen eines fließfähigen Reaktionsgemisches aus mindestens zwei fließfähigen, miteinander zu Massivstoff oder Schaumstoff ausreagierenden Reaktionskomponenten, wobei diese Reaktionskomponenten in eine Mischkammer injiziert und im Durchlauf vermischt werden und der die Mischzone verlassende Gemischstrom angedrosselt wird, wie aus EP-A-0 070 486 bekannt

Ein Mischkopf zur Durchführung dieses Verfahrens ist auch aus der DE-C-23 27 269 bzw. der US-A-3 975 128 bekannt. Der Mischkammer ist hierbei unmittelbar ein Auslaufkanal unter einem rechten Winkel nachgeordnet, der der Beruhigung des Reaktionsgemisches dienen soll und sich durch den zugeordneten Ausstoßkolben reinigen läßt. In der Praxis ist auch schon versucht worden, diesen Ausstoßkolben zum Androsseln des aus der Mischkammer austretenden Reaktionsgemischstromes zu verwenden. Bei schwer vermischbaren Reaktionskomponenten muß eine so starke Androsselung erfolgen, daß es nicht gelingt, den Gemischstrom vor Eintritt in den Formhohlraum in ausreichendem Maße zu beruhigen. Dies äußert sich darin, daß das Reaktionsgemisch aus der Austrittsöffnung des Auslaufkanals herausspritzt und keine geschlossene Fließfront bildet.

Ein weiterer bekannter Mischkopf (DE-B-26 12 812 bzw. US-A-4 141 470) weist zwischen Mischkammer und Auslaufrohr als Drosselorgan einen Querschieber auf, der mit einer Durchströmöffnung versehen ist. Durch Verschiebung dieses Drosselorgans läßt sich der gewünschte Durchströmquerschnitt einstellen. Zum Zwecke des Reinigens von Mischkammer und Auslaufrohr wird der Drosselschieber in die Reinigungsstellung gebracht, so daß der Ausstoßkolben durch die Durchströmöffnung hindurchfahren kann. Dieser Mischkopf hat eine relativ große Baulänge. Problematisch ist hierbei die exakte Steuerung von Drosselorgan und Ausstoßkolben, damit keine Kollision dieser beiden Elemente erfolgt. Weiterhin ungünstig ist die sich daraus ergebende große Baulänge des Ausstoßkolbens, denn hierbei besteht die Gefahr, daß ein zwischen Ausstoßkolben und Mischkammer- und Auslaufrohrwandung verbleibender Gemischfilm den Ausstoßkolben mit dieser Wandung verliebt und ein Blockieren des Kolbens verursachen könnte. Um diesem vorzubeugen, muß man für den Ausstoßkolben einen überdimensionierten Antrieb vorsehen. Wegen der Knickgefahr für den Ausstoßkolben muß dieser in bezug auf seine Länge einen gewissen Mindestdurchmesser aufweisen. Deshalb kann man die Querschnitte von Mischkammer und Auslaufrohr nicht beliebig Klein dimensionieren. Nachteilig ist weiterhin, daß Mischkammerquerschhitt und Querschnitt des Auslaufrohres übereinstimmen müssen.

Die eingangs beschriebene Vorrichtung gemäß EP-A-0 070 486 weist zwar nicht die verfahrenstechnischen Nachteile der vorgenannten Mischköpfe auf, ist jedoch konstruktiv sehr aufwendig und hat demzufolge eine unhandliche Größe. Der Gemischstrom wird hier beim Austritt aus der Mischkammer angedrosselt und anschließend tangential in eine Zyklonströmung übergeleitet.

Es besteht die Aufgabe, ein Verfahren und eine Einrichtung zu schaffen, womit auch bei der Verarbeitung schwer vermischbarer Reaktionskomponenten die schnelle Beruhigung des Gemischstromes nach dem Androsseln noch verbessert wird. Die neue Einrichtung soll konstruktiv geringeren Aufwand und kleine Abmessungen besitzen und störunanfällig, betriebssicher und selbstreinigend sein.

Diese Aufgabe wird dadurch gelöst, daß der Gemischstrom nach dem Androsseln in zwei einen Kern umströmende Teilströme aufgeteilt wird, welche gegenüber der Teilungsstelle wieder zusammentreffen und senkrecht zu sich selbst in eine Senkenströmung übergehen.

Dadurch wird erreicht, daß der aus der Drosselstelle austretende Gemischstrom in zwei Arme aufgeteilt und durch den Übergang in einen kanalisierten Ringstrom spritzfrei aufgefangen wird und daß diese Ringströmung bereits weitgehend beruhigt ist und als Senkenströmung in einen als Senke wirkenden Auslaßkanal abgeleitet wird. Insbesondere durch die neuartige Ausbildung einer Senkenströmung treten Spritzer gar nicht erst auf.

Vorzugsweise ist diese Senkenströmung hinsichtlich der Einströmgeschwindigkeit und des Einströmwinkels einstellbar.

Durch diese Maßnahme lassen sich die genannten Bedingungen den Erfordernissen der verschiedenartigen Reaktionsgemische aufgrund ihrer Eigenschaften, insbesondere der Viskosität, anpassen.

Gemäß einer bevorzugten Ausführungsform des neuen Verfahrens wird zur Beendigung des Mischvorganges in einer Folgesteuerung die Zufuhr der Reaktionskomponenten unterbrochen, die Mischzone entleert, die Androsselung aufgehoben und Gemischreste ausgestoßen.

Auf diese Weise wird sichergestellt, daß keine Gemischreste in dem System verbleiben und es durch Aushärten verunreinigen.

Die neue Einrichtung zum Herstellen eines fließfähigen Reaktionsgemisches aus mindestens zwei fließfähigen, miteinander zu Massivstoff oder Schaumstoff ausreagierenden Reaktionskomponenten geht aus von Vorratsbehältern, von denen Zuleitungen über Dosierpumpen zu einem Mischkopf führen, welche eine Mischkammer mit darin geführtem Ausstoßkolben enthält, in die die Zuleitungen mittels Einspritzdüsen münden, und aus einem quer zur Mischkammer in einer Führungsbohrung angeordneten Drosselschieber sowie einem Auslaufkanal mit Reinigungskolben.

Das Neue ist darin zu sehen, daß der Drosselschieber in der Führungsbohrung konzentrisch um den Reinigungskolben angeordnet ist, wobei die Führungsbohrung in Strömungsrichtung des Gemisches über den Auslaß der Mischkammer hinausreicht und in der Mischphase mit dem vorderen Ende des Reinigungskolbens einen Ringkanal bildet, der in den Auslaufkanal übergeht

Dadurch wird erreicht, daß der aus dem zwischen dem Mischkammerauslaß und dem Drosselschieber gebildeten Drosselspalt austretende Gemischstrom nicht direkt in den Auslaufkanal eintreten kann, sondern er gelangt zunächst in einen Ringkanal, der durch die Wandung der Führungsbohrung des Drosselschiebers nach außen und durch den den Drosselschieber überragenden Reinigungskolben gebildet ist. Aus diesem Ringkanal strömt dann das Reaktionsgemisch zwischen der Übergangskante von Führungsbohrung und Auslaufkanal zu der Stirnkante des Reinigungskolbens als Senkenströmung ab, wobei der Auslaufkanal die Senke bildet. Durch die konzentrische Anordnung von Drosselschieber und Reinigungskolben besitzt diese Einrichtung eine sehr kompakte Bauweise; Kollisionen der Kolben und des Drosselschiebers sind nicht möglich. Es hat sich gezeigt, daß auch an der ringförmigen Absatzfläche am Übergang zwischen Führungsbohrung und Auslaufkanal sich kein Material aufbaut, weil bei gegenstoßendem Drosselschieber Gemischreste voll und ganz weggedrückt werden.

Vorzugsweise ist die Drosselstellung des Drosselschiebers einstellbar.

Dadurch läßt sich der Drosselspalt bzw. der Drosselquerschnitt beliebig den Erfordernissen anpassen. Insbesondere kann damit Einfluß auf die Kammerung der Mischkammer genommen werden.

Gemäß einer besonderen Ausführungsform ist die hintere Totpunktlage des Reinigungskolbens einstellbar.

Hierdurch läßt sich die Höhe des Austrittsspaltes aus dem zwischen der Wandung der Führungsbohrung des Drosselschiebers und dem Reinigungskolben gebildeten Ringkanal einstellen, wodurch sich die Ausströmgeschwindigkeit und der Ausströmwinkel aus dem Ringkanal, welcher dem Einströmwinkel in den Auslaufkanal entspricht, einstellen lassen.

Besonders vorteilhaft ist auch eine besondere Ausführungsform, gemäß welcher die hintere Totpunktlage des Ausstoßkolbens der Mischkammer einstellbar ist.

Durch diese Einstellbarkeit läßt sich das Mischkammervolumen verändern bzw. den Erfordernissen anpassen, was insbesondere für schwer vermischbare Reaktionskomponenten von Vorteil sein kann. Es versteht sich, daß dabei die Einspritzdüsen während des Mischvorganges freibleiben müssen.

In einer Zeichnung ist die erfindungsgemäße Einrichtung in einem Ausführungsbeispiel rein schematisch dargestellt, wobei der Mischkopf selbst ausführlich, die Zusatzaggregate jedoch nur symbolhaft wiedergegeben sind. Es zeigen:
- Fig. 1: einen Längsschnitt durch die Einrichtung in Arbeitsstellung,
- Fig. 2: einen Schnitt gemäß Linie A-B in Fig. 1,
- Fig. 3: einen Längsschnitt durch die Einrichtung in Ruhestellung und
- Fig. 4: einen Schnitt gemäß Linie C-D in Fig. 3.

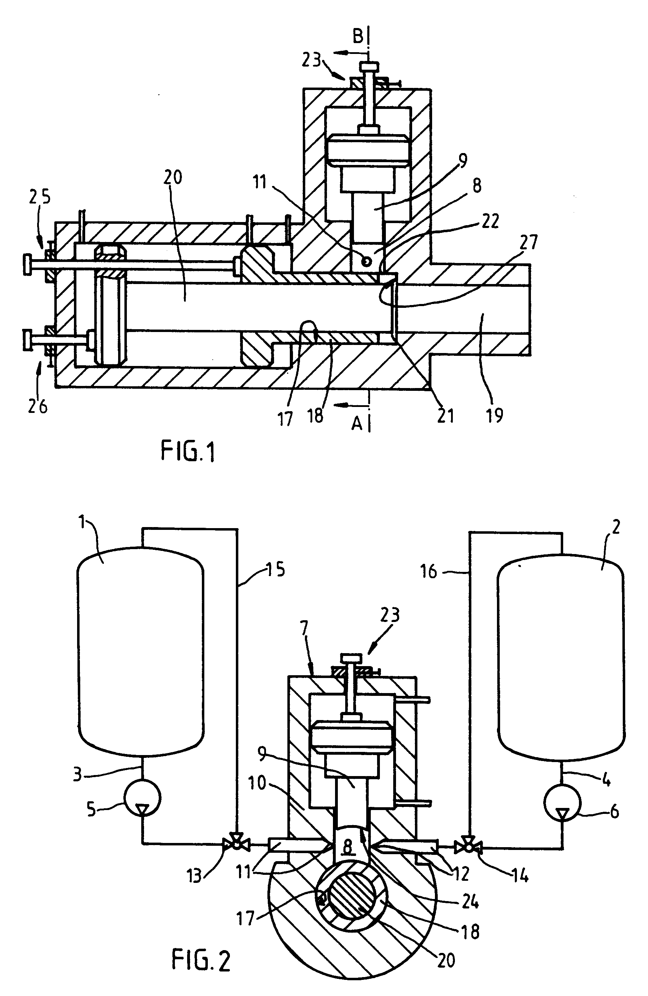

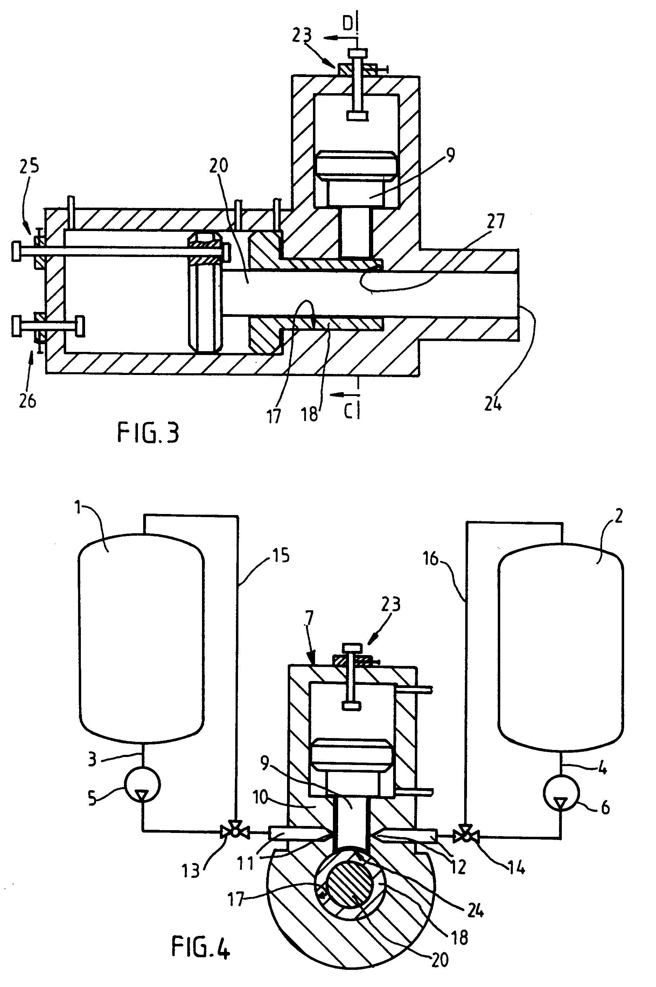

Von Vorratsbehältern 1, 2 für Polyol bzw. Isocyanat führen Zuleitungen 3, 4 über Dosierpumpen 5, 6 zu einem Mischkopf 7. In diesem ist eine Mischkammer 8 angeordnet, in der ein Ausstoßkolben 9 geführt ist. Im Gehäuse 10 des Mischkopfes 7 sind Einspritzdüsen 11, 12 gelagert, über welche die Zuleitungen 3, 4 in die Mischkammer 8 münden. Umschaltventile 13, 14 ermöglichen die Rückförderung der Reaktionskomponenten über die Rücklaufleitungen 15, 16 in die Vorratsbehälter 1, 2. Der Mischkammer 8 nachgeordnet ist quer dazu eine Führungsbohrung 17 für einen Drosselschieber 18, welcher einen in einem Auslaufkanal 19 geführten Reinigungskolben 20 konzentrisch umgibt Da die Führungsbohrung 17 einen größeren Durchmesser aufweist als der Auslaufkanal 19 bzw. der Reinigungskolben 20, ist ein Ringkanal 21 (Fig. 1) vorhanden, in welchen der durch den Drosselspalt gebildete Auslaß 22 der Mischkammer 8 einmündet (Fig. 1). Dem Ausstoßkolben 9 ist eine Einstellvorrichtung 23 zugeordnet, welche aus einem einstellbaren Anschlag besteht, mit welchem die hintere Totpunktlage wählbar ist. Die vordere Totpunktlage ist konstruktiv so eingestellt, daß die Stirnfläche 24 des Ausstoßkolbens 9 mit der Wandung der Führungsbohrung 17 fluchtet und damit gegen den Drosselschieber 18 anliegt (Fig. 3, 4). Sowohl der Drosselschieber 18 als auch der Reinigungskolben 20 sind mit aus fixierbaren Anschlägen bestehenden Einstellvorrichtungen 25 bzw. 26 für die hinteren Totpunktlagen ausgestattet Die vordere Totpunktlage des Drosselschiebers 18 ist durch den Absatz 27 am Übergang der Führungsbohrung 17 zum Auslaufkanal 19 gebildet Die vordere Totpunktlage des Reinigungskolbens 20 entspricht dem Ende des Auslaufkanals 19.

Ausgehend von der Stellung der Kolben und des Drosselschiebers gemäß Fig. 3 und 4 ist die Arbeitsweise folgende:
Die Umschaltventile 13 und 14 sind auf Rezirkulation geschaltet. Der Reinigungskolben 20, der Drosselschieber 18 sowie der Ausstoßkolben 9 werden in ihre hinteren Totpunktlagen gefahren, wobei vorausgesetzt ist, daß diese Totpunktlagen mittels der Einstellvorrichtungen 23, 25 und 26 vorher auf die gewünschte Stellung einjustiert wurden. Nunmehr werden die Umschaltventile 13 und 14 umgesteuert und die Reaktionskomponenten strömen durch die Einströmdüsen 11 und 12 in die Mischkammer 8, verwirbeln dort und gelangen durch den als Drosselspalt ausgebildeten Auslaß 22 in den Ringkanal 21. Der Gemischstrom teilt sich dabei auf und umfließt das über den Drosselschieber 18 vorstehende Ende des Reinigungskolbens 20 und fließt als Senkenströmung in den Auslaufkanal 19 ab. Ist die benötigte Gemischmenge durchgelaufen, schalten die Umschaltventile 13 und 14 auf Rücklauf um und der Austoßkolben 9 fährt in die vordere Totpunktlage, entleert dabei die Mischkammer 8 und füllt sie aus. Sodann fährt der Drosselschieber 18 in seine vordere Totpunktlage und verdrängt dabei das Reaktionsgemisch aus dem Ringkanal 21 und füllt ihn aus. Schließlich wird mit dem Reinigungskolben 20 der Auslaufkanal 19 entleert, indem er in seine vordere Totpunktlage fährt.

## Patentansprüche

1. Verfahren zum Herstellen eines fließfähigen Reaktionsgemisches aus mindestens zwei fließfähigen, miteinander zu Massivstoff oder Schaumstoff ausreagierenden Reaktionskomponenten, wobei diese Reaktionskomponenten in eine Mischzone injiziert und im Durchlauf vermischt werden und der die Mischzone verlassende Gemischstrom angedrosselt wird, dadurch gekennzeichnet, daß der Gemischstrom nach dem Androsseln in zwei einen Kern umströmenden Teilströme aufgeteilt wird, welche gegenüber der Teilungsstelle wieder zusammentreffen und senkrecht zu sich selbst in eine Senkenströmung übergehen.

2. Verfahren nach Anspruch 1, dadurch gekennzeichnet, daß diese Senkenströmung hinsichtlich der Einströmgeschwindigkeit und des Einströmwinkels einstellbar ist.

3. Verfahren nach Anspruch 1 oder 2, dadurch gekennzeichnet, daß zur Beendigung des Mischvorganges in einer Folgesteuerung die Zufuhr der Reaktionskomponenten unterbrochen, die Mischzone entleert, die Androsselung aufgehoben und Gemischreste ausgestoßen werden.

4. Einrichtung zum Herstellen eines fließfähigen Reaktionsgemisches aus mindestens zwei fließfähigen, miteinander zu Massivstoff oder Schaumstoff ausreagierenden Reaktionskomponenten, bestehend aus Vorratsbehälter (1, 2), von denen Zuleitungen (3, 4) über Dosierpumpen (5, 6) zu einem Mischkopf (7) führen, welcher eine Mischkammer (8) mit darin geführtem Ausstoßkolben (9) enthält, in die die Zuleitungen (3, 4) mittels Einspritzdüsen (11, 12) münden, und aus einem quer zur Mischkammer (8) in einer Führungsbohrung (17) angeordneten Drosselschieber (18) sowie einem Auslaufkanal (19) mit Reinigungskolben (20), dadurch gekennzeichnet, daß der Drosselschieber (18) in der Führungsbohrung (17) konzentrisch um den Reinigungskolben (20) angeordnet ist, wobei die Führungsbohrung (17) in Strömungsrichtung des Gemisches über den Auslaß (22) der Mischkammer (8) hinausreicht und in der Mischphase mit dem vorderen Ende des Reinigungskolbens (20) einen Ringkanal (21) bildet, der in den Auslaufkanal (19) übergeht.

5. Einrichtung nach Anspruch 4, dadurch gekennzeichnet, daß die Drosselstellung des Drosselschiebers (18) einstellbar ist.

6. Einrichtung nach Anspruch 4 oder 5, dadurch gekennzeichnet, daß die hintere Totpunktlage des Reinigungskolbens (20) einstellbar ist.

7. Einrichtung nach einem der Ansprüche 4,5 oder 6, dadurch gekennzeichnet, daß die hintere Totpunktlage des Ausstoßkolbens (9) der Mischkammer (8) einstellbar ist.

## Claims

1. A process for the production of a flowable reaction mixture composed of at least two flowable reactive components which react with one another to form solid material or foam material, where these reactive components are injected into a mixing zone and are mixed in a continuous flow, and the mixture stream issuing from the mixing zone is throttled, characterised in that the mixture stream, following the throttling, is divided into two sub-streams which flow around a core and which recombine opposite the division point and form a sink stream at right angles to themselves.

2. A process as claimed in Claim 1, characterised in that this sink stream is adjustable in respect of the inflow speed and the inflow angle.

3. A process as claimed in Claim 1 or 2, characterised in that in order to terminate the mixing procedure, in a follow-up control step the supply of the reactive components is interrupted, the mixing zone is emptied, the throttling is discontinued and the mixture residues are ejected.

4. A device for the production of a flowable reaction mixture composed of at least two flowable reactive components which react with one another to form solid material or foam material, comprising feed containers (1, 2) from which supply lines (3, 4) lead via dispensing pumps (5, 6) to a mixing head which contains a mixing chamber (8) in which a discharging piston (9) is mounted and into which the supply lines (3, 4) lead via injection nozzles (11, 12), and comprising a throttle slide (18) which is disposed transversely to the mixing chamber (8) in a guide bore (17), and an outlet channel (19) with cleaning piston (20), characterised in that the throttle slide (18) is arranged in the guide bore (17) concentrically around the cleaning piston (20), where the guide bore (17) extends beyond the outlet (22) of the mixing chamber (8) in the direction of flow of the mixture, and in the mixing phase forms an annular channel (21) with the front end of the cleaning piston (20), which annular channel (21) leads into the outlet channel (19).

5. A device as claimed in Claim 4, characterised in that the throttling position of the throttle slide (18) is adjustable.

6. A device as claimed in Claim 4 or 5, characterised in that the rear dead-centre position of the cleaning piston (20) is adjustable.

7. A device as claimed in one of Claims 4, 5 or 6, characterised in that the rear dead-centre position of the discharging piston (9) of the mixing chamber (8) is adjustable.

## Revendications

1. Procédé pour la préparation d'un mélange réactionnel coulant à partir d'au moins deux constituants de réaction coulants réagissant l'un avec l'autre pour produire une matière solide ou un produit moussant, ces constituants de réaction étant injectés dans une zone de mélange et mélangés lors du parcours et le courant de mélange quittant la zone de mélange étant étranglé, caractérisé en ce que le courant de mélange est divisé après l'étranglement en deux courants partiels s'écoulant autour d'un noyau, lesquels se rencontrent à nouveau en face de la position de partage et se confondent en un écoulement d'affaissement perpendiculaire à eux-mêmes.

2. Procédé selon la revendication 1, caractérisé en ce qu'on peut ajuster cet écoulement d'affaissement en ce qui concerne la vitesse de l'écoulement d'entrée et l'angle de l'écoulement d'entrée.

3. Procédé selon la revendication 1 ou 2, caractérisé en ce qu'à la fin du processus de mélange on interrompt dans un contrôle automatique à séquence l'introduction des constituants de réaction, on vide la zone de mélange, on supprime l'étranglement et on expulse des restes de mélange.

4. Dispositif pour la préparation d'un mélange réactionnel coulant à partir d'au moins deux constituants de réaction coulants, réagissant l'un avec l'autre pour produire une matière solide ou un produit moussant, constitué de réservoirs de stockage (1, 2), desquels des canalisations (3, 4) mènent à une tête mélangeuse (7) en passant par des pompes de dosage (5, 6), laquelle contient une chambre de mélange (8) munie d'un piston d'expulsion (9) introduit à l'intérieur de celle-ci, dans laquelle les canalisations (3, 4) débouchent au moyen de buses d'injection (11, 12), et d'un tiroir d'étranglement (18) disposé dans un creux de guidage (17) transversalement à la chambre de mélange (8) ainsi que d'un canal de sortie (19) muni d'un piston de nettoyage (20), caractérisé en ce que le tiroir d'étranglement (18) dans le creux de guidage (17) est disposé de manière concentrique autour du piston de nettoyage (20), le creux de guidage (17) dépassant dans la direction de l'écoulement du mélange de la sortie (22) de la chambre de mélange (8) et formant dans la phase de mélange avec l'extrémité avant du piston de nettoyage (20) un canal annulaire (21), qui se confond dans le canal de sortie (19).

5. Dispositif selon la revendication 4, caractérisé en ce qu'on peut ajuster la position d'étranglement du tiroir d'étranglement (18).

6. Dispositif selon la revendication 4 ou 5, caractérisé en ce qu'on peut ajuster la position arrière de point mort du piston de nettoyage (20).

7. Dispositif selon l'une quelconque des revendications 4, 5 ou 6, caractérisé en ce qu'on peut ajuster la position arrière de point mort du piston d'expulsion (9) de la chambre de mélange (8).
